# EUROPÄISCHE PATENTSCHRIFT

(11) **EP 3 768 073 B1**
(45) Veröffentlichungstag und Bekanntmachung des Hinweises auf die Patenterteilung: **17.04.2024**
(21) Anmeldenummer: 18714995.0
(22) Anmeldetag: 20.03.2018
(51) Int. Cl.: A01J 25/00, A01J 25/12

(54) **VORRICHTUNG ZUM BEFÜLLEN VON FORMEN MIT KÄSEBRUCH ODER EINER MISCHUNG AUS KÄSEBRUCH UND MOLKE**
APPARATUS FOR FILLING MOULDS WITH CURD OR A MIXTURE OF CURD AND MILK
DISPOSITIF DE REMPLISSAGE DE MOULES AVEC DES CHUTES DE FROMAGE OU UN MÉLANGE DE CHUTES DE FROMAGE ET DE PETIT-LAIT

(43) Veröffentlichungstag der Anmeldung: 27.01.2021
(73) Patentinhaber: Sulbana AG, 8352 Elsau (CH)
(72) Erfinder: VEIT, Gerhard, 89281 Altenstadt / Filzingen (DE); REUTLINGER, Robert, 87763 Lautrach (DE)
(74) Vertreter: Keller Schneider Patent- und Markenanwälte AG
(86) Internationale Anmeldenummer: PCT/EP2018/057054
(87) Internationale Veröffentlichungsnummer: WO 2019/179609

(56) Entgegenhaltungen:
- EP-A1- 1 269 832
- WO-A1-92/20217
- GB-A- 2 149 640
- US-B1- 7 437 991

## Beschreibung

### Technisches Gebiet

Die Erfindung betrifft eine Vorrichtung zum Befüllen von Formen mit Käsebruch oder einer Mischung aus Käsebruch und Molke sowie ein dazugehöriges Verfahren.

### Stand der Technik

Aus dem Stand der Technik sind derartige Anlagen bekannt. Die DE 10 2006 020 226 B4 (Franz Müller GmbH) offenbart beispielsweise eine Füllanlage zur Käseherstellung sowie ein Verfahren zur Abfüllung eines Moll<e-I<äsebruch-Gemischs. Das Molke-Käsebruch-Gemisch wird aus einem Vorlagebehälter in eine oder mehrere Formen abgefüllt, aus denen die Molke abgezogen wird, so dass eine enge Ansammlung der I<äsebruchstücl<e entsteht. Durch Beaufschlagung mit einer Presskraft kann weitere Molke aus der Form ausgetrieben werden. Für die Füllanlage ist ein Be- und Entlademechanismus vorgesehen, mit welchem die wenigstens eine Form aus einem Bereitstellungsbereich in eine Wanne eingesetzt und aus dieser wieder entnommen werden kann. Der Be- und Entlademechanismus kann als Kopfstation ausgebildet sein, so dass die Zu- und Abfuhr der Behälter über die gleiche Seite der Wanne erfolgen kann. In jede einzelne Form kann ein Abfüllrahmen abgesenkt werden, in welchen das Moll<e-I<äsebruch-Gemisch gefüllt wird. Der Abfüllrahmen ist für Molke durchlässig, so dass diese den Abfüllrahmen leicht durchdringen kann. Aus einem Drainagespalt zwischen dem Abfüllrahmen und der Form kann Molke abgezogen werden. Die Formen sind ferner aus der Wanne entnehmbar, um diese als Transportmittel zu nutzen und deren Inhalt weiteren Prozessschritten der I<äseherstellung zuzuführen. WO 92/20217 gilt als Offenbarung des Oberbegriffs von Anspruch 1.

Bekannte Anlagen sind jedoch in Bezug auf die Prozessgestaltung häufig konstruktionsbedingten Einschränkungen unterworfen. Es besteht daher nach wie vor Bedarf nach verbesserter Vorrichtung zum Befüllen von Formen mit Käsebruch oder einer Mischung aus Käsebruch und Molke.

### Darstellung der Erfindung

Aufgabe der Erfindung ist es, eine dem eingangs genannten technischen Gebiet zugehörende Vorrichtung zu schaffen, welche eine flexiblere Prozessgestaltung ermöglicht. Im Besonderen soll die Vorrichtung einen möglichst kontinuierlichen Prozess ermöglichen sowie einfach skalierbar sein.

Die Lösung der Aufgabe ist durch die Merkmale des Anspruchs 1 definiert. Gemäss der Erfindung verfügt die Vorrichtung zum Befüllen von Formen mit Käsebruch oder einem Gemisch aus Käsebruch und Molke mindestens eine Produktionslinie mit mindestens einer Wanne, in welcher wenigstens eine Form aufgenommen werden kann. Die Produktionslinie umfasst:
a) eine Beladungsstation, welche über erste Mittel verfügt, um die wenigstens eine Form in die mindestens eine Wanne einzulegen;
b) eine Füllstation, welche über mindestens eine Zuleitung verfügt, mit welcher Käsebruch oder ein Gemisch aus Käsebruch und Molke in die wenigstens eine Form gefüllt werden kann;
c) eine Decl<elstation, welche über zweite Mittel verfügt, um auf den in der mindestens einen Form eingefüllten Käsebruch oder dem eingefüllten Gemisch aus Käsebruch und Moll<e einen Deckel aufzulegen;
d) eine Pressstation, welche über Druckbeaufschlagungsmittel verfügt, mit denen der Deckel auf den in der wenigstens einen Form eingefüllten Käsebruch oder dem eingefüllten Gemisch aus Käsebruch und Molke mit einem vorbestimmten Druck gedrückt werden kann;
e) eine Entnahmestation, welche über dritte Mittel verfügt, um die wenigstens eine Form aus der Wanne zu entnehmen.

Die Vorrichtung verfügt ferner über Bewegungsmittel, mit denen die mindestens eine Wanne sequentiell zwischen der Beladungsstation, der Füllstation, der Decl<elstation, der Pressstation, der Entnahmestation und zurück zur Beladungsstation der mindestens einen Produktionslinie bewegt werden kann.

Durch die Bewegung der Wanne in sequentieller Weise durch die Bearbeitungsstationen wird eine automatisierte, flexible und kontinuierliche Befüllung von Formen mit Käsebruch oder eine Mischung aus Käsebruch und Molke möglich. Trotzdem wird der Vorteil beibehalten, dass jede befüllte Form einer bestimmten Produktionscharge zugeordnet werden kann, so dass die nötige Qualitätssicherung und Nachverfolgbarl<eit gewährleistet ist. Durch die Verwendung einzelner Stationen kann die Vorrichtung zudem modular aufgebaut werden, womit diese für das Abfüllen unterschiedlicher Formen und von Käsebruch unterschiedlicher Käsesorten einfach anpassbar ist. Ferner lässt sich zur Erzielung einer höheren Produktion die Anlage in der Grösse beliebig skalieren, insbesondere durch eine Hinzufügung von Produktionslinien.

Als Käsebruch wird gemeinhin ein Material bezeichnet, welches aus der durch Zugabe von Lab oder Milchsäure dicl<gelegten Milch entsteht, nachdem diese zerteilt wurde. Zur Herstellung von Käse wird aus dem Käsebruch anschliessend die Molke abgetrennt. Je nach der herzustellenden I<äseart wird der Käsebruch in unterschiedlich kleine Stücke zerteilt, wobei bei der Zerteilung Molke austritt. Für Weichl<äse werden nur grob zerteilte Stücke verwendet, während für Halbhart- und Hartl<äse stets feinere Stücke verwendet werden.

Die erfindungsgemässe Vorrichtung eignet sich zum Abfüllen von Käsebruch oder einem Gemisch aus Käsebruch und Molke in Formen, in denen der Käsebruch oder das Gemisch unter Druck gepresst werden, wodurch I<äselaibe entstehen. Durch das Pressen kann der Gehalt an Molke im Käsebruch nach Bedarf weiter verringert werden. Die Molke wird beim Pressen aus dem Käsebruch ausgetrieben.

Die wenigstens eine Form, welche in die mindestens eine Wanne eingelegt wird, kann über eine beliebige geometrische Form und Grösse verfügen. Vorzugsweise ist die Form jedoch rund, viereckig oder quadratisch. Das Volumen der wenigstens einen Form kann variieren. Vorzugsweise weist die wenigstens eine Form ein Volumen auf, welches die Aufnahme von 25 - 800 kg, im Besondern 30 - 90 kg, an Käsebruch oder der Mischung aus Käsebruch und Molke ermöglicht. Die wenigstens eine Form weist eine umlaufende Wandung auf, welche bevorzugt über eine Vielzahl an Perforationen verfügt, deren Durchmesser so gewählt ist, dass diese für Flüssigkeiten, insbesondere für Molke durchlässig sind, während der Käsebruch in der Form zurückbehalten wird. In einer Ausführungsform kann die Form über einen Boden verfügen, der die Form einseitig verschliesst. Somit liegt die wenigstens eine Form in dieser Ausführungsform als einseitig offenes Gefäss vor, in welches der Käsebruch oder die Mischung aus Käsebruch und Molke gefüllt werden kann. Die Form ist vorzugsweise aus Kunststoff oder aus Edelstahl gefertigt. Kunststoffe, welche im Bereich der Lebensmittelherstellung geeignet sind, sind dem Fachmann bekannt. Geeignet sind beispielsweise Polyethylen (PE) und/oder Polypropylen (PP). Als Edelstahl ist beispielsweise ein Edelstahl vom Typ AISI 304 geeignet (klassiert nach dem System des American Iron and Steel Institute (AISI)).

Die Form und Grösse der Wanne ist vorzugsweise auf die Form und Grösse der zu verwendenden wenigstens einen Form angepasst, wobei diese derart gewählt werden, dass die wenigstens eine Form vollständig in die Wann eingelegt werden kann. Die Wanne ist vorzugsweise aus Edelstahl gefertigt. Vorzugsweise verfügt die Wanne über eine rechteckige Grundfläche mit einer umlaufenden Wandung. Die Abmessungen der Grundfläche sind vorzugsweise derart gewählt, dass mehr als eine Form in der Wanne Platz hat. Insbesondere bevorzugt ist die Wanne derart geformt und dimensioniert, dass drei Formen in die Wanne eingelegt werden können. Je nach Grösse und geometrische Form der mindestens einen Form kann die Wanne jedoch auch derart geformt und dimensioniert sein, dass mehr oder weniger als drei Formen in diese eingelegt werden können. Die Formen lassen sich vorzugsweise hintereinander in die Wanne einlegen.

Die mindestens eine Produktionslinie kann über mehr als eine Wanne verfügen, welche beispielsweise neben- und/oder hintereinander angeordnet sind. Vorzugsweise verfügt die mindestens eine Produktionslinie jedoch über genau eine Wanne.

Die ersten Mittel sind derart ausgebildet, dass diese die mindestens eine Form von einer erste Warteposition der Beladungsstation heraus in die Wanne einlegen kann. Auf der ersten Warteposition kann hierbei eine Mehrzahl von Formen angeordnet sein, welche nach und nach durch die ersten Mittel in die mindestens eine Wanne eingelegt werden. Alternativ sind die ersten Mittel jedoch auch derart ausgestaltet, dass diese mehr als eine Form gleichzeitig von der ersten Warteposition heraus in die Wanne einlegen kann. Die ersten Mittel können beispielsweise als Förderband oder Manipulator ausgestaltet sein. Die Formen werden beispielsweise durch eine Bedienperson auf die erste Warteposition gelegt oder mittels einer Fördereinrichtung auf diese befördert.

Mit der Füllstation kann die mindestens eine Form mit Käsebruch oder einer Mischung aus Käsebruch und Molke befüllt werden. Sofern mehr als eine Form in die Wanne eingelegt werden kann, verfügt die Füllstation entweder über eine der Anzahl an Formen angepasste Anzahl an Zuleitungen oder die Zuleitung ist über eine Vorrichtung derart verschiebbar, dass diese nacheinander über die in der mindestens einen Wanne eingelegten Formen positioniert werden kann, so dass alle Formen mit dem Käsebruch oder der Mischung aus Käsebruch und Molke befüllt werden können.

Vorzugsweise verfügt die Füllstation über eine Messeinheit, welche eine möglichst präzise Befüllung der mindestens einen Form mit einem vordefinierten Gewicht oder einem vordefinierten Volumen an Käsebruch oder Gemisch aus Käsebruch und Molke ermöglicht.

Zum Befüllen der Form verfügt die Vorrichtung über eine geeignete Fördereinheit, mit der der Käsebruch oder das Gemisch aus Käsebruch und Molke über die mindestens eine Zuleitung in die wenigstens eine Form eingefüllt werden kann. Vorzugsweise handelt es sich bei der mindestens eine Fördereinheit um eine Pumpe.

Die zweiten Mittel sind vorzugsweise derart ausgestaltet, dass mit diesen mindestens ein über die mindestens eine Wanne bewegt werden kann, so dass der wenigstens eine Deckel über der mindestens einen Form positioniert und auf den in der Form eingefüllten Käsebruch oder dem Gemisch aus Käsebruch und Molke gelegt werden kann

Die Druckbeaufschlagungsmittel sind vorzugsweise als mindestens ein Stempel ausgestaltet, welcher von oben vertikal auf den Deckel, der auf dem Käsebruch oder auf dem Gemisch aus Käsebruch und Molke in der wenigstens einen Form mit einer vorbestimmten Kraft drücken kann. Der mindestens eine Stempel wird dabei vorzugsweise in vertikaler Richtung linear durch einen Antrieb bewegt. Der Antrieb ist vorzugsweise als pneumatischer Zylinder ausgestaltet. Alternativ kann der Antrieb auch ein elektromechanischer Antrieb sein.

Durch die Druckbeaufschlagung wird der Käsebruch einerseits in die Form gepresst und andererseits kann weitere Molke aus dem Käsebruch gepresst/ausgetrieben werden.

Mit den dritten Mitteln kann die wenigstens eine Form aus der mindestens einen Wanne entnommen werden. Die Entnahme der Form erfolgt in gefülltem Zustand, das heisst, dass die Form nach wie vor Käsebruch oder ein Gemisch aus Käsebruch und Molke beinhaltet.

Die Form mit Inhalt kann anschliessend je nach herzustellender I<äseart weiteren Produktionsschritten unterworfen werden, beispielsweise einem Bad in einer Salzlacl<e und/oder einem Reifeprozess.

In einer Ausführungsform können die Beladungsstation und die Entladestation in einer einzigen Multifunl<tionsstation zusammengefasst sein, das heisst, dass bei dieser spezifischen Ausführungsform die Beladungsstation und die Entladestation als ein und dieselbe Station ausgebildet sind. In diesem Fall wird die mindestens eine Wanne von der Pressstation für den Entladungsschritt zur Beladungsstation zurückgefahren. Weiter kann in einer Ausführungsform vorgesehen sein, dass sowohl die Beladungsstation, die Decl<elstation als auch die Entladestation in einer einzigen Multifunl<tionsstation zusammengefasst sind. In diesem Fall übernimmt die Multifunl<tionsstation die Funktion der drei genannten Stationen. Vorzugsweise weist jedoch die mindestens eine Produktionslinie je eine Beladungsstation sowie eine Entladestation auf.

Die Bewegungsmittel können beliebig ausgestaltet sein. Diese müssen einzig in der Lage sein, die mindestens eine Wanne durch die einzelnen Stationen zu bewegen. Die Bewegungsmittel können demnach als Förderband, Wagen oder ähnlich ausgestaltet sein. Vorzugsweise sind die Fördermittel als schienengeführter Wagen ausgestaltet. Ein schienengeführter Wagen kann besonders präzise in den verschiedenen Stationen positioniert werden. Der Wagen kann über einen eigenen Antrieb verfügen oder über einen externen Antrieb bewegt werden, welcher über entsprechende Zugmittel mit dem Wagen mechanisch verbunden ist.

Die Vorrichtung verfügt ferner über eine Steuerung, mit welcher die Bewegungsmittel sowie alle Elemente der unterschiedlichen Stationen, insbesondere die ersten Mittel, die zweiten Mittel, die dritten Mittel und die Drucl<baufschlagungsmittel angesteuert werden können. Dadurch kann ein vollautomatischer Betrieb der Vorrichtung erzielt werden. Vorzugsweise verfügt die Steuerung über Eingabemittel, mit denen sich unterschiedliche Parameter der Vorrichtung durch eine Bedienperson einstellen lassen. Weiter bevorzugt verfügt die Steuerung über eine I<ommunil<ationsschnittstelle, mit welcher die Steuerung mit einem Netzwerk verbunden werden kann. Dadurch kann die Vorrichtung über das Netzwerk fernüberwacht oder auch ferngesteuert werden, beispielsweise von einer Leitstelle innerhalb einer Fabrikationshalle aus. Vorzugsweise verfügt die Steuerung über einen Speicher, in welchem Produktionsabläufe und Produktionsparameter für unterschiedliche I<äsearten gespeichert sind, so dass eine möglichst einfache und schnelle Umstellung der Vorrichtung zum Befüllen von Formen mit Käsebruch oder einem Gemisch aus Käsebruch und Molke für unterschiedlicher I<äsearten erfolgen kann.

Die Beladungsstation, die Füllstation, die Decl<elstation, die Pressstation sowie die Entnahmestation sind vorzugsweise in einer Linie hintereinander angeordnet. Dadurch muss die mindestens eine Wanne lediglich linear bewegt werden, was die Ausgestaltung der Bewegungsmittel vereinfacht. Alternativ können die Stationen jedoch auch anders relativ zueinander angeordnet sein. Beispielsweise können die Stationen einer Produktionslinie auch kreisförmig angeordnet sein. Das heisst, dass die mindestens eine Wanne durch die Bewegungsmittel in einem Kreis bewegt werden, wobei die mindestens eine Wanne nach Vollendung einer vollständigen Kreisbewegung wieder bei der Beladungsstation ankommt.

Die Vorrichtung verfügt vorzugsweise über mindestens zwei Produktionslinien, insbesondere über drei, vier oder mehr Produktionslinien. Die Produktionslinien sind bevorzugt alle gleich ausgestaltet. Das heisst, dass die Vorrichtung über zwei oder mehr identische Produktionslinien verfügt. Die Produktionslinien sind vorzugsweise nebeneinander angeordnet. Das heisst, dass die Beladungsstationen aller Produktionslinien linear hintereinander stehen. Dasselbe gilt für die weiteren Stationen der Produktionslinien. Eine derartige Anordnung hat den Vorteil, dass zum Beispiel für zwei oder mehr Beladungsstationen nur ein erstes Mittel vorgesehen sein muss. Das heisst, dass mit nur einem ersten Mittel Formen in die Wannen von mehreren Produktionslinien eingelegt werden können. Dadurch können die Produl<tions- und Wartungskosten einer Vorrichtung gesenkt werden. Gleicherweise kann auch lediglich nur ein zweites Mittel für zwei oder mehr Decl<elstationen und/oder nur ein drittes Mittel für zwei oder mehr Entnahmestationen eingesetzt werden. Bei einer derartigen Anordnung ist jedoch zu beachten, dass nicht gleichzeitig Wannen zweier Produktionslinien in der jeweiligen Beladungsstation, Decl<elstation oder Entladestation sein können. Das heisst, dass in diesem Fall die Wannen der Produktionslinien zeitlich relativ zueinander versetzt bewegt werden müssen.

Vorzugsweise ist die mindestens eine Wanne mit mindestens einer Leitung verbunden, mit welcher eine Flüssigkeit, insbesondere Molke, in die Wanne eingefüllt oder aus dieser entleert werden kann.

Dies ermöglicht eine flexible Füllung oder Entleerung der mindestens einen Wanne mit einer Flüssigkeit oder mit Molke. Insbesondere kann vor dem Füllen der mindestens einen Form mit Käsebruch oder dem Gemisch aus Käsebruch und Molke die mindestens eine Wanne mit Molke gefüllt werden. Durch die Perforationen der mindestens einen Form wird diese zunächst mit Molke gefüllt, bevor in der Füllstation der Käsebruch oder das Gemisch aus Käsebruch und Molke in die mindestens eine Form gefüllt wird. Vorzugsweise wird die mindestens eine Wanne mit einem Volumen von Molke gefüllt, welcher ausreicht, dass die mindestens eine Form in der Wanne vollständig unter der Molke liegt. Das Abfüllen des Käsebruchs oder des Gemischs aus Käsebruch und Molke in die mindestens eine Form erfolgt somit vollständig unter Molke, das heisst isoliert von der Aussenluft. Dadurch kann die Anzahl an Lufteinschlüssen innerhalb der mindestens einen Form verringert werden. Ferner verbessern sich auch die hygienischen Bedingungen beim Füllen der mindestens einen Form. Die Molke wird vorzugsweise nach dem Entfernen der wenigstens einen Form aus der mindestens einen Wanne aus dieser entleert. Dadurch verbleibt der Käsebruch oder das Gemisch aus Käsebruch und Molke innerhalb der mindestens einen Form in allen Stationen der Vorrichtung vollständig innerhalb der Molke. Je nach Art des Käses, der hergestellt werden soll, kann auch keine Molke in die mindestens eine Wanne gefüllt werden oder die Molke kann sofort nach dem Füllen der mindestens einen Form wieder aus der mindestens einen Wanne entleert werden.

Alternativ könne auch andere Flüssigkeiten in die Wanne gefüllt und entleert werden, zum Beispiel eine Salzlacl<e oder ähnlich. Welche Flüssigkeit wann in die mindestens eine Wanne gefüllt wird und wie lange diese darin verbleibt kann in Abhängigkeit des mit dem Käsebruch herzustellenden Käses variiert werden.

Die Vorrichtung weist vorzugsweise wenigstens eine Fördervorrichtung auf, um die wenigstens eine Form zur Beladungsstation und/oder den mindestens einen Deckel zur Decl<elstation zu fördern sowie um vorzugsweise die mit Käsebruch oder dem Gemisch von Käsebruch und Molke gefüllte mindestens eine Form von der Entladestation weg zu fördern.

Vorzugsweise ist die Fördervorrichtung ein Förderband oder ein Rollenförderer.

Die Entnahmestation verfügt vorzugsweise über eine Spülvorrichtung, mit welcher die mindestens eine Wanne nach der Entnahme der wenigstens einen Form gespült werden kann.

Dadurch kann die mindestens eine Wanne vor dem Zurückfahren zur Beladungsstation ausgespült werden, was die Hygiene erhöht. Die Spülvorrichtung verfügt vorzugsweise über eine Mehrzahl an Düsen, mit denen Wasser und/oder eine Reinigungsflüssigkeit in die mindestens eine Wanne gesprüht werden können. Weiter kann die Spülvorrichtung auch über mechanische Reinigungselemente, wie zum Beispiel rotierende Bürsten oder ähnlich verfügen, mit denen eine mechanische Reinigung der mindestens einen Wanne möglich ist.

Die ersten Mittel der Beladungsstation, die zweiten Mittel der Decl<elstation und die dritten Mittel der Entladestation sind vorzugsweise als erste, zweite beziehungsweise dritte Handhabungseinrichtung ausgestaltet, mit denen sich die wenigstens eine Form in mindestens zwei Raumrichtungen linear bewegen lässt.

Die erste, die zweite und/oder die dritte Handhabungseinrichtung verfügen vorzugsweise über eine Greifeinrichtung, mit welcher die Handhabungseinrichtung die mindestens eine Form oder wenigstens einen Deckel greifen kann. Die Greifeinrichtung kann beispielsweise Saugnäpfe umfassen, mit denen die wenigstens eine Form mittels Unterdruck ergriffen werden kann. Vorzugsweise weist die Greifeinrichtung jedoch mindestens einen mechanischen Greifer auf, welcher die wenigstens eine Form mittels Kraft oder Formschluss ergreifen kann. Der Greifer wird vorzugsweise pneumatisch oder elektromechanisch bewegt.

Vorzugsweise sind die erste, die zweite und/oder die dritte Handhabungseinrichtung in der vertikalen Raumrichtung und in einer horizontalen Raumrichtung bewegbar. Dadurch können die Handhabungseinrichtungen jeweils auf die mindestens eine Form oder den wenigstens einen Deckel auf der ersten Warteposition der Beladungsstation, der zweiten Warteposition der Decl<elstation oder in der mindestens einen Wanne abgesenkt werden, so dass die jeweilige Greifeinrichtung die mindestens eine Form oder den wenigstens einen Deckel ergreifen kann. Anschliessend kann durch eine vertikale Bewegung der jeweiligen Handhabungseinrichtung angehoben und mit einer Bewegung in der horizontalen Raumrichtung über die mindestens eine Wanne oder über eine Ablageposition der Entladungsstation positioniert werden. Durch eine weitere Bewegung in vertikaler Richtung kann die mindestens eine Form oder der wenigstens eine Deckel dann in die mindestens eine Wanne abgelegt oder auf die Ablageposition abgelegt werden.

Die erste, zweite und/oder dritte Handhabungseinrichtung kann alternativ zusätzlich zur vertikalen Raumrichtung auch in zwei horizontale Raumrichtungen bewegbar sein, wobei die beiden horizontalen Raumrichtungen vorzugweise in einem Winkel von 90° zueinander stehen. So können beispielsweise sowohl hintereinander als auch nebeneinander auf der ersten Warteposition der Beladungsstation stehende Formen ergriffen werden beziehungsweise Formen sowohl nebeneinander als auch hintereinander auf die Ablageposition der Entladestation gelegt werden. Ferner können die Handhabungseinrichtungen oder deren Greifeinrichtung auch derart ausgestaltet sein, dass diese eine ergriffene Form oder Deckel um mindestens eine Achse drehen können.

Die Handhabungseinrichtungen verfügen vorzugsweise über mindestens einen pneumatischen und/oder elektromechanischen Antrieb.

Die Füllstation verfügt vorzugsweise über mindestens ein wenigstens in vertikaler Richtung linear bewegbares Abfüllelement. Das Abfüllelement verfügt über eine Haube, welche durch eine Bewegung in vertikaler Richtung auf die mindestens eine Wanne abgesenkt werden kann, wobei die mindestens eine Zuleitung innerhalb der Haube angeordnet ist.

Dadurch wird sichergestellt, dass bei der Befüllung der mindestens einen Form die Haube des wenigstens einen Abfüllelements sowie die mindestens eine Wanne eine mindestens teilweise geschlossene Hülle bilden. Dies verhindert ein allfälliges Eindringen von Fremdstoffen in die mindestens eine Form während des Füllvorgangs. Ferner werden auch die weiteren Elemente der Füllstation vor Spritzern geschützt. Dadurch können die hygienischen Bedingungen während des Füllvorganges erhöht werden.

Das mindestens eine Abfüllelement ist vorzugsweise zusätzlich in einer horizontalen Richtung bewegbar, so dass mit dem mindestens einen Abfüllelement auch mehrere hintereinander in der mindestens einen Wanne eingelegte Formen mit Käsebruch oder mit dem Gemisch aus Käsebruch und Molke gefüllt werden können.

Das mindestens eine Abfüllelement verfügt vorzugsweise über mindestens einen pneumatischen und/oder elektromechanischen Antrieb mit welchem das Abfüllelement mindesten in der vertikalen Raumrichtung linear bewegt werden kann.

Vorzugsweise verfügt die Vorrichtung für jede Produktionslinie über mindestens einen ersten Tank für Käsebruch oder einem Gemisch aus Käsebruch und Molke sowie über mindestens einen zweiten Tank für eine Flüssigkeit, insbesondere für Moll<e.

Der mindestens eine erste Tank und der mindestens eine zweite Tank sind insbesondere über Leitungen mit entsprechenden Lagertanks verbunden. In diesem Fall agieren der mindestens eine erste Tank sowie der mindestens eine zweite Tank als Puffer zwischen den Lagertanks sowie der jeweiligen Produktionslinie. Die Grösse des mindestens einen ersten Tanks ist dabei derart gewählt, dass mit deren Inhalt alle in der mindestens einen Wanne der jeweiligen Produktionslinie eingelegten Formen mit Käsebruch oder dem Gemisch aus Käsebruch und Molke gefüllt werden können. Ferner ist die Grösse des mindestens einen zweiten Tanks derart gewählt, dass mit dessen Inhalt die mindestens eine Wanne der jeweiligen Produktionslinie mit der Flüssigkeit, insbesondere Molke gefüllt werden kann.

Der mindestens eine erste Tank ist vorzugsweise über eine erste Leitung mit der Füllstation der mindestens einen Produktionslinie fluidisch verbunden. Nach Bedarf kann dieser ersten Leitung eine Pumpe zugeordnet sein, mit welcher sich der Käsebruch oder das Gemisch aus Käsebruch und Molke vom mindestens einen ersten Tank zur Füllstation der mindestens einen Produktionslinie fördern lässt.

Der mindestens eine zweite Tank ist vorzugsweise über die mindestens eine Leitung mit der mindestens einen Wanne der mindestens einen Produktionslinie verbunden. Der mindestens einen Leitung ist vorzugsweise mindestens eine Pumpe zugeordnet, mit welcher die Flüssigkeit, insbesondere die Molke vom mindestens einen zweiten Tank in die mindestens eine Wanne gefördert werden kann.

Sofern die Vorrichtung über mindestens zwei Produktionslinien verfügt, umfasst die Vorrichtung vorzugsweise eine Steuerung, welche die Bewegungsmittel jeder Produktionslinie derart steuert, dass die mindestens eine Wanne einer Produktionslinie um mindestens eine Position relativ zur mindestens einen Wanne einer benachbarten Produktionslinie versetzt sequentiell zwischen der Beladungsstation, der Füllstation, der Decl<elstation, der Pressstation, der Entnahmestation und zurück zur Beladungsstation der mindestens einen Produktionslinie bewegt werden kann.

Dadurch wird zwischen den Produktionslinien eine getaktete Befüllung von Formen mit Käsebruch oder einem Gemisch aus Käsebruch und Molke möglich. Dies insbesondere dann vorteilhaft, wenn zwei oder mehr Produktionslinien dieselbe erste und/oder zweite Handhabungseinrichtung verwenden.

In einer bevorzugten Ausführungsform sind die Beladungsstation, die Füllstation, die Decl<elstation, die Pressstation und die Entladestation linear hintereinander angeordnet. Das heisst, dass alle Stationen einer Produktionslinie in einer Linie angeordnet sind. Sofern die Vorrichtung über mehr als eine Produktionslinie verfügt, sind die einzelnen Produktionslinien parallel nebeneinander angeordnet.

Vorzugsweise sind die Beladungsstation, die Decl<elstation und die Entladestation in einer Multifunl<tionsstation zusammengefasst. Alternativ bevorzugt können auch nur die Beladungsstation und die Entladestation in der Multifunl<tionsstation zusammengefasst sein. Die Multifunl<tionsstation übernimmt dabei alle Funktionen der jeweiligen Stationen. Das heisst, dass durch die Multifunl<tionsstation die drei beziehungsweise zwei separaten Stationen in der Produktionslinie ersetzt.

Die vorliegende Anmeldung betrifft ferner eine Anordnung umfassend eine Vorrichtung gemäss der oben stehenden Beschreibung sowie mindestens eine Form zum Befüllen mit Käsebruch oder einem Gemisch aus Käsebruch und Molke. Die Form verfügt über mindestens eine umlaufende Wandung mit Perforationen, welche derart ausgestaltet sind, dass diese den Durchtritt von Flüssigkeit, insbesondere von Molke durch die Wandung zulassen jedoch Käsebruch innerhalb der Form zurückbehalten.

Vorzugsweise umfasst die Anordnung mehr als eine Form. Insbesondere bevorzugt ist die mindestens eine Wanne der mindestens einen Produktionslinie derart geformt und dimensioniert, dass drei Formen in die mindestens eine Wanne eingelegt werden können. Die mindestens eine Form ist vorzugsweise derart ausgebildet, dass diese mit 25 - 800 kg, im Besondern 30 - 90 kg, an Käsebruch oder der Mischung aus Käsebruch und Molke befüllt werden kann.

Die vorliegende Anmeldung betrifft ferner ein Verfahren zum Befüllen von Formen mit Käsebruch oder einer Mischung aus Käsebruch und Molke, insbesondere mit einer oben beschriebenen Vorrichtung, umfassend die Schritte:
a) Einlegen mindestens einer Form in wenigstens eine Wanne in mindestens einer Produktionslinie einer Vorrichtung durch erste Mittel einer Beladungsstation der mindestens einen Produktionslinie;
b) Bewegen der mindestens einen Wanne von der Beladungsstation zu einer Füllstation der mindestens einen Produktionslinie;
c) Befüllen der mindestens einen Form mit Käsebruch oder einer Mischung aus Käsebruch und Molke über mindestens eine Zuleitung der Füllstation;
d) Bewegen der mindestens einen Wanne von der Füllstation zu einer Decl<elstation der mindestens einen Produktionslinie;
e) Auflegen eines Deckels auf den in der mindestens einen Form eingefüllten Käsebruch oder einer Mischung aus Käsebruch und Molke durch zweite Mittel der Decl<elstation;
f) Bewegen der mindestens einen Wanne von der Füllstation zu einer Pressstation der mindestens einen Produktionslinie;
g) Drücken des Deckels mit einem vorbestimmten Druck auf die in der mindestens einen Wanne gefüllten Käsebruch durch Druckbeaufschlagungsmittel der Pressstation;
h) Bewegen der mindestens einen Wanne von der Pressstation zu einer Entnahmestation der mindestens einen Produktionslinie;
i) Entnahme der mindestens einen Form aus der mindestens einen Wanne durch dritte Mittel der Entnahmestation;
j) Bewegen der mindestens einen Wanne zurück zur Beladungsstation.

Vorzugsweise wird das Verfahren mit mindestens zwei Produktionslinien durchgeführt, wobei eine Steuerung die Bewegung der mindestens einen Wanne jeder Produktionslinie derart steuert, dass die sequentielle Bewegung der mindestens einen Wanne einer ersten Produktionslinie durch alle Stationen hindurch um mindestens eine Position, vorzugsweise um zwei Positionen versetzt zur Bewegung der mindestens einen Wanne einer zweiten Produktionslinie, welche zur ersten Produktionslinie benachbart ist, erfolgt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische, dreidimensionale Ansicht einer erfindungsgemässen Vorrichtung;
- Fig. 2: die Vorrichtung der Fig. 1 von oben gesehen;
- Fig. 3: ein schematisches Schnittbild einer Produktionslinie sowie den ersten Schritt des Verfahrens;
- Fig. 4: das Schnittbild der Fig. 3, wobei sich die Wanne in der Füllstation befindet entsprechend dem dritten Schritt des Verfahrens;
- Fig. 5: das Schnittbild der Fig. 3, wobei sich die Wanne in der Decl<elstation befindet entsprechend dem fünften Schritt des Verfahrens;
- Fig. 6: das Schnittbild der Fig. 3, wobei sich die Wanne in der Pressstation befindet entsprechend dem siebten Schritt des Verfahrens;
- Fig. 7: das Schnittbild der Fig. 3, wobei sich die Wanne in der Entnahmestation befindet entsprechend dem neunten Schritt des Verfahrens;
- Fig. 8: eine schematische Darstellung einer zweiten Ausführungsform einer erfindungsgemässen Vorrichtung;
- Fig. 9: eine schematische Darstellung einer dritten Ausführungsform der erfindungsgemässen Vorrichtung.

Grundsätzlich sind in den Figuren gleiche Teile mit gleichen Bezugszeichen versehen.

### Wege zur Ausführung der Erfindung

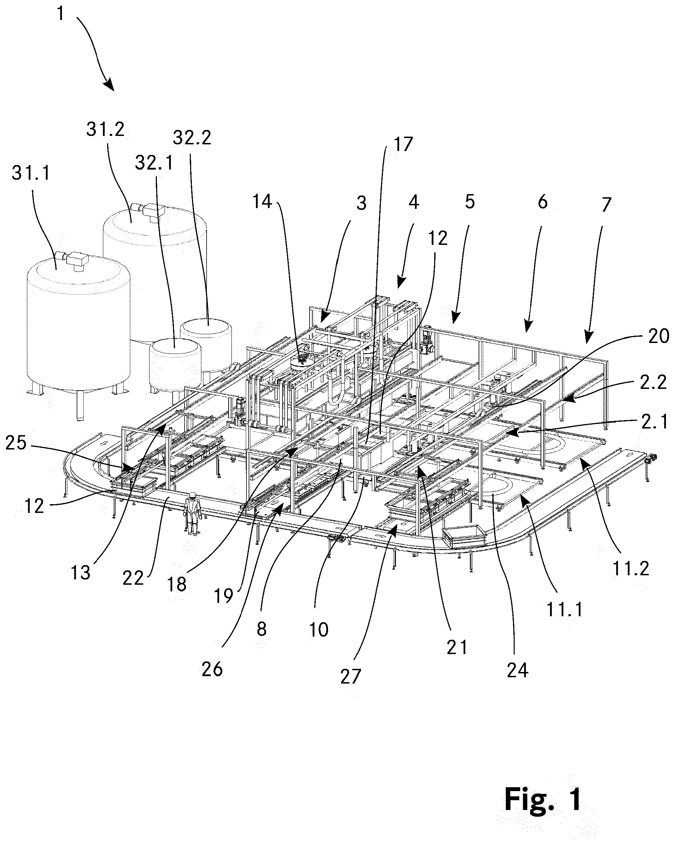

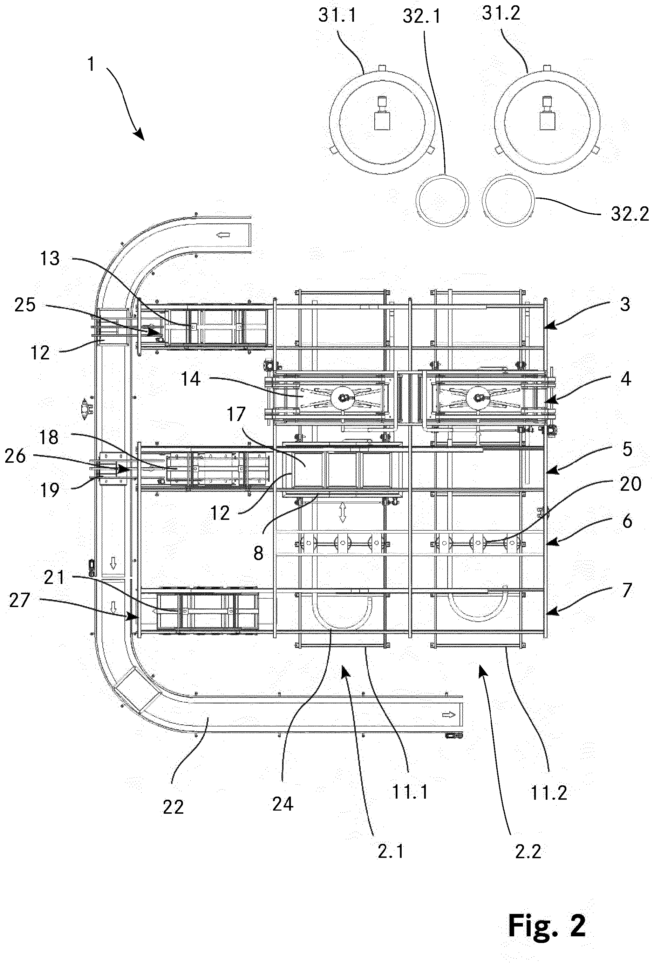

Die Figs. 1 und 2 zeigen Übersichten einer erfindungsgemässen Vorrichtung 1. Während die Fig. 1 eine schematische, dreidimensionale Ansicht der erfindungsgemässen Vorrichtung 1 zeigt, ist auf der Fig. 2 die Vorrichtung 1 von oben zu sehen. Die Vorrichtung 1 der gezeigten Ausführungsform umfasst zwei Produktionslinien 2.1, 2.2, welche nebeneinander angeordnet sind. Aus darstellerischen Gründen werden einzelne Elemente der Produktionslinien 2.1, 2.2 nur bei einer Produktionslinie 2.1, 2.2 gezeigt, allerdings sind beide Produktionslinien beim gezeigten Beispiel identisch ausgeführt.

Jede Produktionslinie 2.1, 2.2 verfügt über eine Beladestation 3, eine Füllstation 4, eine Decl<elstation 5, eine Pressstation 6 sowie eine Entladestation 7. Mittels eines Bewegungsmittels, welcher bei der gezeigten Ausführungsform aus einem Wagen 10, der auf Schienenführungen läuft, besteht, kann pro Produktionslinie 2.1, 2.2 eine Wanne 8 zwischen den einzelnen Stationen bewegt werden. In der Wanne können Formen 12 eingelegt werden. Die Formen 12 werden hierbei durch ein Förderband 22 zu einer ersten Warteposition 25 der Beladungsstation 3 transportiert werden. Die Beladungsstation 3 verfügt über eine erste Handhabungseinrichtung 13, welche eine Form 12 oder mehrere Formen 12 erfassen und in die Wanne 8 einlegen kann. Die erste Handhabungseinrichtung 13 ist bei der gezeigten Ausführungsform als Portallader ausgestaltet, welche Formen 12 in die Wannen beider Produktionslinien 2.1, 2.2 einlegen kann. Die erste Handhabungseinrichtung 13 ist dabei derart ausgestaltet, dass diese ein Greifelement, welches eine oder mehrere Formen 12 ergreifen kann, in der vertikalen Richtung sowie in einer horizontalen Richtung bewegt werden kann. Durch die Verwendung der ersten Handhabungseinrichtung 13 für beide Produktionslinien 2.1, 2.2 können die Komplexität der Vorrichtung 1 sowie deren Herstellungskosten gesenkt werden. Alternativ ist es natürlich möglich, für jede der Produktionslinien 2.1, 2.2 eine eigene, erste Handhabungseinrichtung 13 vorzusehen. Bei der gezeigten Ausführungsform sind die Wannen 8 beider Produktionslinien 2.1, 2.2 derart dimensioniert, dass diese drei Formen 12 aufnehmen können.

Die Füllstation 4 verfügt über ein Abfüllelement 14, welches in der vertikalen Richtung bewegt werden kann, so dass das Abfüllelement 14 auf die in der Wanne 8 eingelegten Formen 12 für den Füllvorgang abgesenkt und anschliessend wieder angehoben werden kann. Das Abfüllelement verfügt über eine oder mehrere Zuleitungen, mit der oder denen Käsebruch 13 oder eine Mischung aus Käsebruch und Molke in die in der Wanne 8 befindlichen Formen 12 eingefüllt werden kann. Bei der gezeigten Ausführungsform verfügt jede der Produktionslinien 2.1, 2.2 über ein eigenes Abfüllelement 14. Alternativ könnte die Vorrichtung 1 jedoch über nur ein Abfüllelement 14 verfügen, welches mittels geeigneter Mittel zwischen den beiden Produktionslinien 2.1, 2.2 verschiebbar ist. Jedes Abfüllelement 14 ist mit einem ersten Tank 31.1, 31.2 verbunden, welcher mit dem Käsebruch beziehungsweise mit der Mischung aus Käsebruch und Molke gefüllt ist.

Die Decl<elstation 5 verfügt über eine zweite Handhabungseinrichtung 18, mit welchem Deckel 19, welche durch das Förderband 22 zu einer zweite Warteposition 26 der Decl<elstation 5 gefördert werden, auf den in den Formen 12 befindlichen Käsebruch 13 oder dem Gemisch aus Käsebruch und Molke aufgelegt werden können. Hierbei wird jeweils ein Deckel 19 pro in der Wanne 8 eingelegten Formen 12 durch die zweite Handhabungseinrichtung 18 aufgelegt. Wiederum verfügt die Vorrichtung 1 über nur eine zweite Handhabungseinrichtung 18, mit welcher Deckel 19 für beide Produktionslinien 2.1, 2.2 ergriffen und in die Formen 12 gelegt werden können. Die zweite Handhabungseinrichtung 18 ist als Portallader ausgestaltet, welcher über zweite Greifmittel verfügt. Die zweiten Greifmittel können durch den Portallader in vertikaler Richtung sowie in einer horizontalen Richtung bewegt werden, so dass ein oder mehrere Deckel 19 ergriffen und in die in der Wanne 8 befindlichen Formen 12 gelegt werden können.

Die Pressstation 6 verfügt über eine Mehrzahl an Stempel 20, welche durch einen pneumatischen oder elektromechanischen Antrieb in vertikaler Richtung bewegt und mit einem vorgegebenen Druck auf die Deckel 19 gedrückt werden können.

Die Entladestation 7 verfügt über eine dritte Handhabungseinrichtung 21, mit welcher die in der Wanne 8 eingebrachten, mit Käsebruch 13 oder einem Gemisch aus Käsebruch und Molke gefüllten Formen 12 in eine Entladeposition 27 befördert werden können. Die gefüllten Formen 12 können anschliessend durch das Förderband 22 wegtransportiert werden. Die dritte Handhabungseinrichtung 21 ist wiederum als Portallader ausgestaltet, welcher Greifelemente sowohl in der vertikalen Richtung als auch in einer horizontalen Richtung bewegen kann, so dass die in der Wanne 8 befindlichen Formen 12 ergriffen und auf die Entladeposition 27 gestellt werden können.

Jede Produktionslinie 2.1, 2.2 verfügt über eine Leitung 24, mit welcher eine Flüssigkeit, insbesondere Molke, in die jeweilige Wanne 8 eingefüllt sowie daraus entleert werden kann. Jede Leitung 24 ist mit einem zweiten Tank 32.1, 32.2 verbunden, welche die Flüssigkeit beziehungsweise die Molke enthält.

Die Funktionsweise der einzelnen Stationen sowie das Verfahren werden in den nachfolgenden Figuren 2 bis 6 näher erläutert.

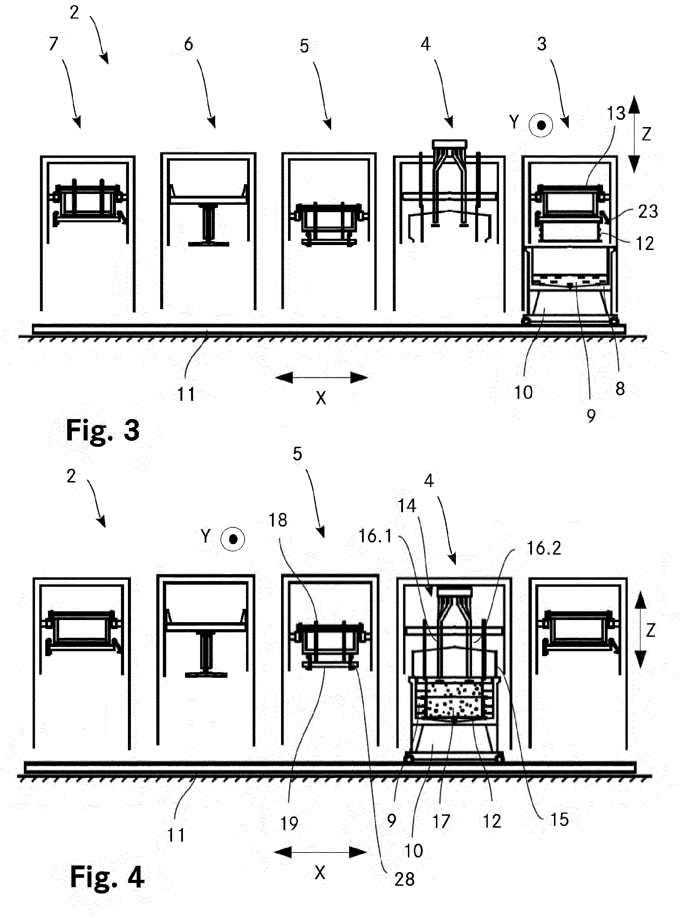

Die Fig. 3 zeigt ein schematisches Schnittbild einer Produktionslinie 2 einer erfindungsgemässen Vorrichtung 1. Bei der Fig. 3 befindet sich die Wanne 8 in der Beladestation 3. Die Wanne 8 ist mit einer definierten Menge an Moll<e 9 gefüllt, wobei die Wanne 8 mittels der Leitung 24 (siehe Figs. 1/2) mit der Molke befüllt werden kann. Die Wanne 8 ist auf einem Wagen 10 angeordnet, welcher auf einer Schienenführung 11 linear in der horizontalen Raumrichtung X beidseitig bewegt werden kann. Der Wagen 10 verfügt demnach über einen geeigneten Antrieb, beispielsweise einem Elektromotor (nicht gezeigt). Die erste Handhabungseinrichtung 13 ist oberhalb der Wanne 9 positioniert und verfügt über erste Greifmittel 23, welche derart bewegbar sind, dass diese zwischen einer geschlossenen Position, in welcher die ersten Greifmittel 23 eine formschlüssige Verbindung mit einer Form 12 eingehen können, und einer offenen Position verschwenkt werden können. In der Fig. 3 befinden sich die ersten Greifmittel 23 in der geschlossenen Position, so dass eine Form 12 durch die erste Handhabungseinrichtung 13 ergriffen ist. Die erste Handhabungsvorrichtung 13 ist als Portallader ausgestaltet, mit dem die ersten Greifmittel 23 und damit eine durch diese ergriffene Form 12 in der vertikalen Richtung Z sowie in der horizontalen Richtung Y bewegt werden können. Die horizontale Richtung Y steht dabei in Blickrichtung des Betrachters rechtwinklig zum Blatt.

Im ersten Schritt des Verfahrens wird mittels der ersten Handhabungseinrichtung 13 eine Form 12 auf der ersten Warteposition 25 (siehe Figs. 1/2) durch Positionieren der ersten Greifmittel 23 über der Form, einem Absenken derselben auf die Form und einer Überführung der ersten Greifmittel 23 von der offenen Position in die geschlossene Position ergriffen. Durch anschliessende Bewegungen der ersten Greifmittel 23 in der vertikalen Raumrichtung X nach oben, einem Verfahren in der horizontalen Richtung Y über die Wanne 8, einem Absenken und einer Bewegung der ersten Greifmittel 23 in die offene Position wird die Form 12 in die Wanne 8 eingelegt. Je nach Anzahl der einzulegenden Formen 12 wird dieser Bewegungsablauf wiederholt.

Anschliessend wird im zweiten Schritt des Verfahrens der Wagen 10 mit der Wanne 8 auf der Schienenführung zur Füllstation 9 bewegt.

Bei der Fig. 4 befindet sich die Wanne 8 in der Füllstation 4. Der Wagen 10 wird derart in der Füllstation 4 positioniert, dass das Abfüllelement 14 oberhalb der Wanne 8 und mit dieser fluchtend zu stehen kommt. Das Abfüllelement 14 verfügt über eine Haube 15, welche derart dimensioniert und geformt ist, dass diese passend mit einer Innenwandung der Wanne 8 in Berührung kommt. Innerhalb der Haube 15 sind Zuleitungen, von welchen auf dem Schnittbild der Figur 3 zwei Zuleitungen 16.1, 16.2 zu sehen sind, angeordnet.

Die Fig. 4 zeigt gleichzeitig den dritten Schritt des erfindungsgemässen Verfahrens, bei welchem das Abfüllelement 14 in vertikaler Richtung abgesenkt wird, so dass die Haube 15 mit der Innenwandung der Wanne 8 in Berührung kommt. Dabei bilden Wanne 8 und Haube 14 eine zumindest teilweise geschlossene Hülle. Durch die Zuleitungen 16.1, 16.2 kann Käsebruch 17 oder eine Mischung aus Käsebruch und Molke in die Form 12 eingefüllt werden. Nach dem Füllvorgang wird das Abfüllelement 14 wieder hochgezogen und die Wanne 8 wird im vierten Schritt des Verfahrens durch den Wagen 10 von der Füllstation 4 zur Decl<elstation 5 bewegt.

Die Decl<elstation 5 verfügt über eine zweite Handhabungseinrichtung 18, mit welcher zweite Greifmittel 28 in der vertikalen Raumrichtung Z sowie in der horizontalen Raumrichtung Y bewegt werden kann. Die zweiten Greifmittel 28 sind derart ausgestaltet, dass mit diesen ein oder mehrere Deckel 19 lösbar ergriffen werden können.

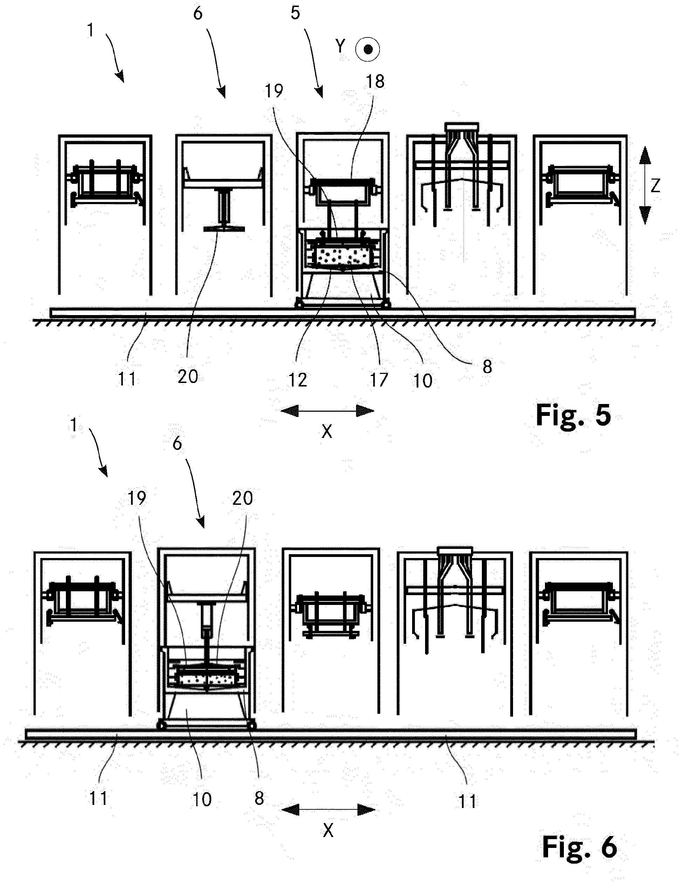

Die Fig. 5 zeigt den fünften Schritt des erfindungsgemässen Verfahrens, bei welchem mittels der zweiten Handhabungseinrichtung 18 der Decl<elstation 5 ein oder mehrere Deckel 19 von der zweiten Warteposition 26 ergriffen, auf die innerhalb der Wanne 8 eingebrachten Form(en) 12 abgesenkt und auf den innerhalb der Form(en) 12 eingefüllten Käsebruch 17 oder dem Gemisch aus Käsebruch und Molke aufgelegt wird. Nach dem Auflege des einen oder der mehreren Deckel 19 werden die zweiten Greifmittel 28 vom einen oder von den mehreren Deckel 19 gelöst und in der vertikalen Raumrichtung Z nach oben gefahren. Sofern mittels der zweiten Greifmittel 28 nur jeweils ein einzelner Deckel 19 ergriffen werden kann, so werden im fünften Schritt des Verfahrens für jede in der Wanne 8 eingelegten Form 12 nacheinander ein Deckel 19 durch die zweite Handhabungseinrichtung 18 von der zweiten Warteposition 26 ergriffen, über der jeweilige Form 12 positioniert und abgesenkt.

Im sechsten Schritt des Verfahrens wird die Wanne 8 mittels des Wagens 10 von der Decl<elstation 5 zur Pressstation 6 bewegt.

Die Pressstation 6 verfügt über mehrere Stempel 20, von denen in der Schnittdarstellung nur ein Stempel 20 zu sehen ist. Die Stempel 20 können über einen pneumatischen oder elektromechanischen Antrieb (nicht gezeigt) in vertikaler Richtung Z bewegt werden. Pro in der Wanne 8 eingelegter Form 12 verfügt die Pressstation 6 über mindestens einen Stempel 20.

Die Fig. 6 zeigt den siebten Schritt des erfindungsgemässen Verfahrens. Bei diesem Schritt werden die Stempel 20 der Pressstation 6 auf die Deckel 19 der in der Wanne 8 befindlichen Form(en) 12 abgesenkt und während einer vorbestimmten Zeit mit einer vorbestimmten Kraft auf diese gedrückt. Dadurch wird der innerhalb der Form(en) befindliche Käsebruch 17 oder die Mischung aus Käsebruch und Molke in die Form gepresst sowie Molke aus dem Käsebruch 17 oder dem Gemisch aus Käsebruch und Molke herausgepresst. Hierzu verfügt die Form 12 oder verfügen die Formen 12 über Perforationen, durch die Molke austreten kann. Vorzugsweise erfolgt das Pressen mit einer konstanten, vorgegebenen Kraft. Alternativ kann die Kraft auch im zeitlichen Verlauf variiert werden. Nach dem Pressen werden die Stempel 20 in vertikaler Richtung bewegt.

Im achten Schritt des Verfahrens wird die Wanne 8 mittels des Wagens 10 entlang der Schienenführung 11 von der Pressstation 6 zur Entladestation 7 bewegt.

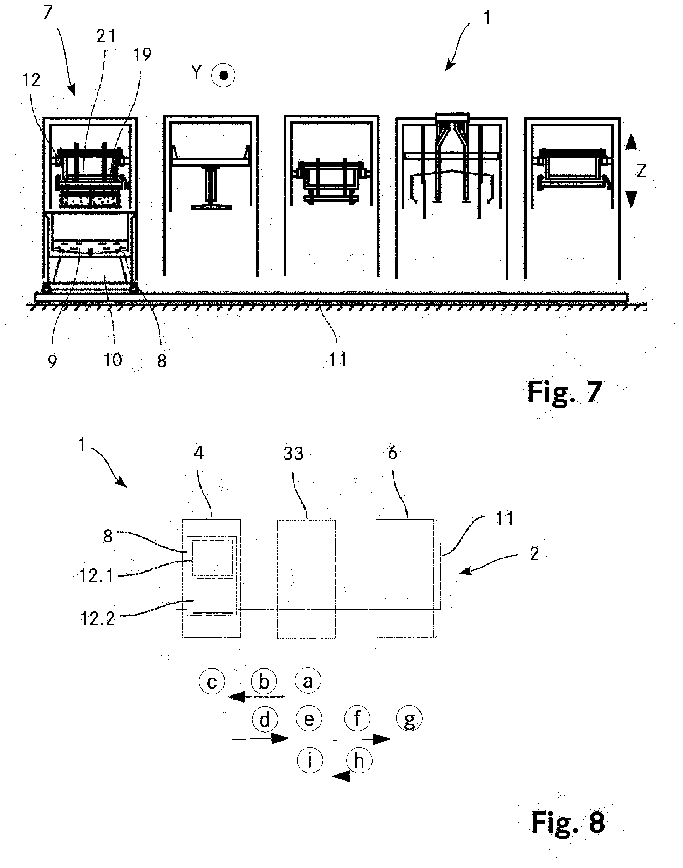

Die Fig. 7 zeigt den neunten Schritt des erfindungsgemässen Verfahrens, bei welchem die innerhalb der Wanne 8 befindliche(n) Form(en) 12 durch die dritte Handhabungseinrichtung 21, welche über dritte Greifmittel 29 verfügt, ergriffen, in vertikaler Richtung Z angehoben, in der horizontalen Richtung Y bewegt und anschliessend in der vertikalen Richtung Z auf die Ablageposition 27 gelegt. Je nachdem wie viele Formen 12 durch die dritten Greifmittel 27 gleichzeitig ergriffen werden können und in Abhängigkeit der Anzahl an Formen 12, welche in der Wanne 8 eingelegt sind, werden diese Schritte nur einmal oder mehrmals wiederholt, bis alle Formen 12 aus der Wanne 8 entfernt sind. Die Moll<e 9 kann anschliessend aus der Wanne 8 entleert werden. Ferner kann die Wanne 8 durch eine Spülvorrichtung 30 mit einer Reinigungsflüssigkeit gereinigt werden.

Anschliessend wird die Wanne 8 durch den Wagen 10 entlang der Schienenführung 11 zur Beladestation 3 bewegt, so dass das Verfahren erneut mit einer neuen Charge durchgeführt werden kann.

Die Fig. 8 zeigt eine schematische Darstellung einer weiteren Ausführungsform der erfindungsgemässen Vorrichtung 1. Bei dieser Ausführungsform weist die Vorrichtung 1 eine Produktionslinie 2 auf, wobei die Beladestation 3, die Decl<elstation 5 sowie die Entnahmestation 7 zusammengefasst sind. Das heisst, dass anstelle der Beladestation 3, Decl<elstation 5 und Entnahmestation 7 eine einzige Multifunl<tionsstation 33 vorhanden ist, welche alle drei Funktionen übernimmt. Hierzu verfügt die Multifunl<tionsstation 33 über einen Manipulator, der die Funktion der ersten, zweiten und dritten Handhabungseinrichtungen übernimmt.

Demnach werden beim ersten Schritt a des erfindungsgemässen Verfahrens in der Multifunl<tionsstation 33 Formen 12.1, 12.2 durch den Manipulator der Multifunl<tionsstation 33 in die Wanne 8 eingelegt. Anschliessend wird die Wanne 8 im zweiten Schritt b von der Multifunl<tionsstation 33 zur Füllstation 4 bewegt, wo die Formen 12.1, 12.2 mit Käsebruch oder der Mischung aus Käsebruch und Molke gefüllt werden. Im vierten Schritt d wird die Wanne 8 zur Multifunl<tionsstation 33 zurück bewegt, wo im fünften Schritt e durch den Manipulator der Multifunl<tionsstation 33 jeweils ein Deckel auf die Formen 12.1, 12.2 gelegt wird. Die Wanne 8 wird dann im sechsten Schritt f zur Pressstation 6 bewegt. Nach dem Pressen im siebten Schritt g wird die Wanne 8 im achten Schritt h wiederum zur Multifunl<tionsstation 33 bewegt, wo im achten Schritt i die Formen 12.1, 12.2 durch den Manipulator der Multifunl<tionsstation 33 entnommen werden. Anschliessend startet der Zyklus der Verfahrensschritte erneut, wobei die Wanne 8 im Unterschied zur Ausführungsform der Figs. 1 bis 7 nicht von der Entladestation zur Beladestation bewegt werden muss, sondern in der Multifunl<tionsstation 33 verbleiben kann.

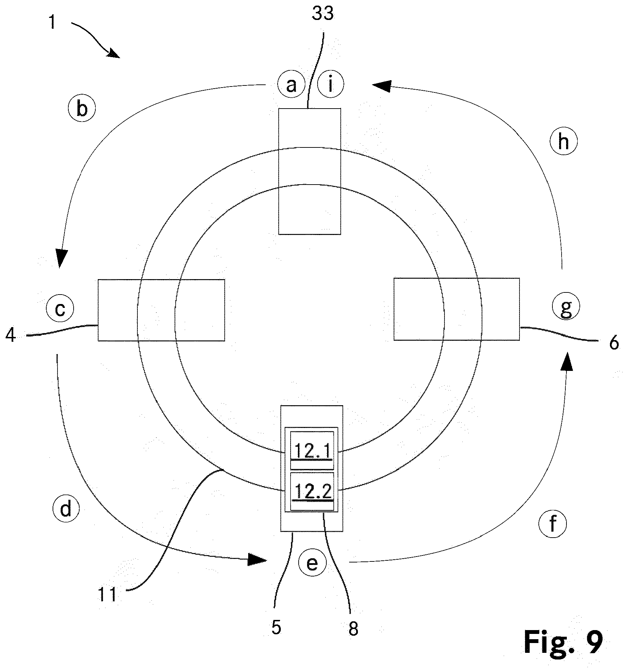

Die Fig. 9 zeigt eine schematische Darstellung einer weiteren Ausführungsform der erfindungsgemässen Vorrichtung 1, bei welcher Stationen kreisförmig angeordnet sind. Dementsprechend beschreibt die Schienenführung 11 einen Kreisbogen. Die Beladestation 3 sowie die Entladestation 7 sind in der Multifunl<tionsstation 33 zusammengefasst. Im Unterschied zur Ausführungsform gemäss Fig. 8 wird die Funktion der Decl<elstation 5 bei dieser Ausführungsform nicht durch die Multifunl<tionsstation 33 übernommen.

Demnach werden beim ersten Schritt a des erfindungsgemässen Verfahrens in der Multifunl<tionsstation 33 Formen 12.1, 12.2 durch den Manipulator der Multifunl<tionsstation 33 in die Wanne 8 eingelegt. Anschliessend wird die Wanne 8 im zweiten Schritt b von der Multifunl<tionsstation 33 zur Füllstation 4 bewegt, wo die Formen 12.1, 12.2 mit Käsebruch oder der Mischung aus Käsebruch und Molke gefüllt werden. Im vierten Schritt d wird die Wanne 8 zur Decl<elstation 5 bewegt, wo im fünften Schritt e durch die zweite Handhabungseinrichtung jeweils ein Deckel auf die Formen 12.1, 12.2 gelegt wird. Die Wanne 8 wird dann im sechsten Schritt f zur Pressstation 6 bewegt. Nach dem Pressen im siebten Schritt g wird die Wanne 8 im achten Schritt h zur Multifunl<tionsstation 33 bewegt, wo im achten Schritt i die Formen 12.1, 12.2 durch den Manipulator der Multifunl<tionsstation 33 entnommen werden. Anschliessend startet der Zyklus der Verfahrensschritte erneut, wobei die Wanne 8 im Unterschied zur Ausführungsform der Figs. 1 bis 7 nicht von der Entladestation zur Beladestation bewegt werden muss, sondern in der Multifunl<tionsstation 33 verbleiben kann.

## Patentansprüche

1. Vorrichtung (1) zum Befüllen von Formen (12) mit Käsebruch oder einem Gemisch aus Käsebruch und Molke, welche über mindestens eine Produktionslinie (2.1, 2.2) mit mindestens einer Wanne (8), in welcher wenigstens eine Form (12) aufgenommen werden kann, verfügt, wobei die Produktionslinie (2.1, 2.2) umfasst:
a) eine Beladungsstation (3), welche über erste Mittel (13) verfügt, um die wenigstens eine Form (12) in die mindestens eine Wanne (8) einzulegen;
b) eine Füllstation (4), welche über mindestens eine Zuleitung (16.1, 16.2) verfügt, mit welcher Käsebruch oder ein Gemisch aus Käsebruch und Molke in die wenigstens eine Form (12) gefüllt werden kann;
c) eine Decl<elstation (5), welche über zweite Mittel (18) verfügt, um auf den in der mindestens einen Form (12) eingefüllten Käsebruch oder dem eingefüllten Gemisch aus Käsebruch und Moll<e einen Deckel (19) aufzulegen;
d) eine Pressstation (6), welche über Druckbeaufschlagungsmittel (20) verfügt, mit denen der Deckel (19) auf den in der wenigstens einen Form (12) eingefüllten Käsebruch oder dem eingefüllten Gemisch aus Käsebruch und Molke mit einer vorbestimmten Kraft gedrückt werden kann;
e) eine Entnahmestation (7), welche über dritte Mittel (21) verfügt, um die wenigstens eine Form aus der Wanne (8) zu entnehmen;
**dadurch gekennzeichnet, dass** die Vorrichtung über Bewegungsmittel (10, 11.1, 11.2) verfügt, mit denen die mindestens eine Wanne (8) sequentiell zwischen der Beladungsstation (3), der Füllstation (4), der Decl<elstation (5), der Pressstation (6), der Entnahmestation (7) und zurück zur Beladungsstation (3) der mindestens einen Produktionslinie (2.1, 2.2) bewegt werden kann.

2. Vorrichtung nach Anspruch 1, **dadurch gekennzeichnet, dass** die Vorrichtung über mindestens zwei Produktionslinien (2.1, 2.2) verfügt, insbesondere über drei, vier oder mehr Produktionslinien.

3. Vorrichtung nach einem der Ansprüche 1 oder 2, **dadurch gekennzeichnet, dass** die mindestens eine Wanne (8) mit mindestens einer Leitung (24) verbunden ist, mit welcher eine Flüssigkeit, insbesondere Molke, in die Wanne (8) eingefüllt oder aus dieser entleert werden kann.

4. Vorrichtung nach einem der Ansprüche 1 bis 3, **dadurch gekennzeichnet, dass** die Vorrichtung wenigstens eine Fördervorrichtung (22) aufweist, um die wenigstens eine Form zur Beladungsstation (3) und/oder den mindestens einen Deckel (19) zur Decl<elstation (5) zu fördern sowie um vorzugsweise die mit Käsebruch oder dem Gemisch von Käsebruch und Molke gefüllte mindestens eine Form (12) von der Entladestation (7) weg zu fördern.

5. Vorrichtung nach einem der Ansprüche 1 bis 4, **dadurch gekennzeichnet, dass** die Entnahmestation (7) über eine Spülvorrichtung (30) verfügt, mit welcher die mindestens eine Wanne (8) nach der Entnahme der wenigstens einen Form (12) gespült werden kann.

6. Vorrichtung nach einem der Ansprüche 1 bis 5, **dadurch gekennzeichnet, dass** die ersten Mittel (13) der Beladungsstation (3), die zweiten Mittel (18) der Decl<elstation (5) und die dritten Mittel (21) der Entladestation (7) als erste, zweite beziehungsweise dritte Handhabungseinrichtung ausgestaltet sind, mit denen sich die wenigstens eine Form (12) oder Deckel (19) in mindestens zwei Raumrichtungen linear bewegen lässt.

7. Vorrichtung gemäss einem der Ansprüche 1 bis 6, **dadurch gekennzeichnet, dass** die Füllstation (4) über mindestens ein in wenigstens vertikaler Richtung linear bewegbares Abfüllelement (14) verfügt, wobei das Abfüllelement (14) über eine Haube (15) verfügt, welche durch eine Bewegung in vertikaler Richtung auf die mindestens eine Wanne (8) abgesenkt werden kann, wobei die mindestens eine Zuleitung innerhalb der Haube (15) angeordnet ist.

8. Vorrichtung gemäss einem der Ansprüche 1 bis 7, **dadurch gekennzeichnet, dass** die Vorrichtung für jede Produktionslinie (2.1, 2.2) über mindestens einen ersten Tank (31.1, 31.2) für Käsebruch oder einem Gemisch aus Käsebruch und Molke sowie über mindestens einen zweiten Tank (32.1, 32.2) für eine Flüssigkeit, insbesondere für Molke, verfügt.

9. Vorrichtung gemäss Anspruch 2 in Kombination mit einem der Ansprüche 3 bis 8, **dadurch gekennzeichnet, dass** die Vorrichtung über eine Steuerung verfügt, welche die Bewegungsmittel (10, 11.1, 11.2) jeder Produktionslinie (2.1, 2.2) derart steuert, dass die mindestens eine Wanne (8) einer Produktionslinie (2.1) um mindestens eine Position versetzt zur mindestens einen Wanne einer benachbarten Produktionslinie (2.2) sequentiell zwischen der Beladungsstation (3), der Füllstation (4), der Decl<elstation (5), der Pressstation (6), der Entnahmestation (7) und zurück zur Beladungsstation (3) der mindestens einen Produktionslinie (2.1, 2.2) bewegt werden kann.

10. Vorrichtung gemäss einem der Ansprüche 1 bis 9, **dadurch gekennzeichnet, dass** die Beladungsstation (3), die Füllstation (4), die Decl<elstation (5), die Pressstation (6) und die Entladestation (7) linear hintereinander angeordnet sind.

11. Vorrichtung gemäss einem der Ansprüche 1 bis 9, **dadurch gekennzeichnet, dass** die Beladungsstation (3), die Decl<elstation (5) und die Entladestation (7) oder die Beladungsstation (3) und die Entladestation (7) in einer Multifunl<tionsstation (33) zusammengefasst sind.

12. Anordnung umfassend eine Vorrichtung gemäss einem der Ansprüche 1 bis 11 sowie mindestens eine Form (12) zum Befüllen mit Käsebruch oder einem Gemisch aus Käsebruch und Molke, **dadurch gekennzeichnet, dass** die Form (12) über mindestens eine umlaufende Wandung mit Perforationen verfügt, welche derart ausgestaltet sind, dass diese den Durchtritt von Flüssigkeit, insbesondere von Moll<e durch die Wandung zulassen jedoch Käsebruch innerhalb der Form (12) zurückbehalten, verfügt.

13. Verfahren zum Befüllen von Formen (12) mit Käsebruch, insbesondere mit einer Vorrichtung (1) gemäss einem der Ansprüche 1 bis 11, umfassend die Schritte:
a) Einlegen mindestens einer Form (12) in wenigstens eine Wanne (8) in mindestens einer Produktionslinie (2.1, 2.2) einer Vorrichtung (1) durch erste Mittel (13) einer Beladungsstation (3) der mindestens einen Produktionslinie (2.1, 2.2);
b) Bewegen der mindestens einen Wanne (8) von der Beladungsstation (3) zu einer Füllstation (4) der mindestens einen Produktionslinie (2.1, 2.2);
c) Befüllen der mindestens einen Form (12) mit Käsebruch über mindestens eine Zuleitung (16.1, 16.2) der Füllstation (4);
d) Bewegen der mindestens einen Wanne (8) von der Füllstation (4) zu einer Decl<elstation (5) der mindestens einen Produktionslinie (2.1, 2.2);
e) Auflegen eines Deckels (19) auf den in der mindestens einen Form (12) eingefüllten Käsebruch mittels zweiter Mittel (18) der Decl<elstation (5);
f) Bewegen der mindestens einen Wanne (8) von der Füllstation (4) zu einer Pressstation (6) der mindestens einen Produktionslinie (2.1, 2.2);
g) Drücken des Deckels (19) mit einem vorbestimmten Druck auf die in der mindestens einen Wanne (8) gefüllten Käsebruch durch Druckbeaufschlagungsmittel (20) der Pressstation (6);
h) Bewegen der mindestens einen Wanne (8) von der Pressstation (6) zu einer Entnahmestation (7) der mindestens einen Produktionslinie (2.1, 2.2);
i) Entnahme der mindestens einen Form (12) aus der mindestens einen Wanne (8) durch dritte Mittel (21) der Entnahmestation (7);
j) Bewegen der mindestens einen Wanne (8) zurück zur Beladungsstation (3).

14. Verfahren gemäss Anspruch 13, **dadurch gekennzeichnet, dass** das Verfahren mit mindestens zwei Produktionslinien (2.1, 2.2) durchgeführt wird, wobei eine Steuerung die Bewegung der mindestens einen Wanne (8) jeder Produktionslinie (2.1, 2.2) derart steuert, dass die sequentielle Bewegung der mindestens einen Wanne (8) einer ersten Produktionslinie (2.1) durch alle Stationen (3, 4, 5, 6, 7) hindurch um mindestens eine Position, vorzugsweise um zwei Positionen versetzt zur Bewegung der mindestens einen Wanne (8) einer zweiten Produktionslinie (2.2), welche zur ersten Produktionslinie (2.1) benachbart ist, erfolgt.

## Claims

1. An apparatus (1) for filling molds (12) with curd or a mixture of curd and whey, said apparatus including at least one production line (2.1, 2.2) having at least one trough (8) in which at least one mold (12) can be received, wherein the production line (2.1, 2.2) comprises:
a) a loading station (3) which includes first means (13) for placing the at least one mold (12) into the at least one trough (8);
b) a filling station (4) which includes at least one supply line (16.1, 16.2) by way of which curd or a mixture of curd and whey can be filled into the at least one mold (12);
c) a covering station (5) which includes second means (18) for placing a cover (19) onto the curd filled into the at least one mold (12), or the mixture of curd and whey filled into the at least one mold (12);
d) a pressing station (6) which includes pressure-impingement means (20) by way of which the cover (19) can be pressed onto the curd filled into the at least one mold (12), or the mixture of curd and whey filled into said mold (12) with a predefined force;
e) a retrieving station (7) which includes third means (21) for retrieving the at least one mold(12) from the trough (8);
**characterized in that** the apparatus (1) includes moving means (10, 11.1, 11.2) by way of which the at least one trough (8) can be moved sequentially between the loading station (3), the filling station (4), the covering station (5), the pressing station (6), the retrieving station (7), and back to the loading station(3) of the at least one production line (2.1, 2.2).

2. The apparatus as claimed in claim 1, **characterized in that** apparatus includes at least two production lines (2.1, 2.2), in particular three, four, or more production lines (2.1, 2.2).

3. The apparatus as claimed in one of claims 1 or 2, **characterized in that** the at least one trough (8) is connected to at least one line (24) by way of which a liquid, in particular whey, can be filled into the trough (8) or emptied from the latter.

4. The apparatus as claimed in one of claims 1 to 3, **characterized in that** the apparatus (1) has at least one conveyor apparatus (22) for conveying the at least one mold (12) to the loading station (3) and/or the at least one cover (19) to the covering station (5), as well as for preferably conveying the at least one mold (12) filled with curd or the mixture of curd and whey away from the unloading station (7).

5. The apparatus as claimed in one of claims 1 to 4, **characterized in that** the retrieving station (7) includes a rinsing apparatus (30) by way of which the at least one trough (8) can be rinsed upon the retrieval of the at least one mold (12).

6. The apparatus as claimed in one of claims 1 to 5, **characterized in that** the first means (13) of the loading station (3), the second means (18) of the covering station (5), and the third means (21) of the unloading station (7) are designed as first, second, or third handling installations, respectively, by way of which the at least one mold (12) or cover (19) is able to be moved in a linear manner in at least two spatial directions.

7. The apparatus as claimed in one of claims 1 to 6, **characterized in that** the filling station (4) includes at least one filling element (14) which is movable in a linear manner at least in the vertical direction, wherein the filling element (14) includes a hood (15) which by a movement in the vertical direction can be lowered onto the at least one trough (12), wherein the at least one supply line is disposed within the hood (15).

8. The apparatus as claimed in one of claims 1 to 7, **characterized in that** the apparatus (1) includes at least one first tank (31.1, 31.2) for curd or a mixture of curd and whey, as well as at least one second tank (32.1, 32.2) for a liquid, in particular for whey, for each production line (2.1, 2.2).

9. The apparatus as claimed in claim 2 in combination with one of claims 3 to 8, **characterized in that** the apparatus (1) includes a controller which controls the moving means (10, 11.1, 11.2) of each production line (2.1, 2.2) in such a manner that the at least one trough (12) of a production line (2.1, 2.2) can be moved sequentially between the loading station (3), the filling station (4), the covering station (5), the pressing station (6), the retrieving station (7), and back to the loading station (3) of the at least one production line (12.1, 12.2) so as to be offset by at least one position in relation to the at least one (12) trough of a neighboring production line (2.1, 2.2).

10. The apparatus as claimed in one of claims 1 bis 9, **characterized in that** the loading station (3), the filling station (4), the covering station (5), the pressing station (6), and the unloading station (7) are disposed behind one another in a linear manner.

11. The apparatus as claimed in one of claims 1 to 9, **characterized in that** the loading station (3), the covering station (5), and the unloading station (7), or the loading station (2) and the unloading station (7), are combined in one multi-function station (33).

12. An assembly comprising an apparatus (1) as claimed in one of claims 1 to 11 as well as at least one mold (12) for filling with curd or a mixture of curd and whey, **characterized in that** the mold (12) possesses at least one encircling wall with perforations which are designed in such a manner that said perforations permit liquid, in particular whey, to pass through the wall but retain curd within the mold (12).

13. A method for filling molds (12) with curd, in particular with an apparatus as claimed in one of claims 1 bis 11, comprising the following steps:
a) placing at least one mold (12) into at least one trough (8) in at least one production line (2.1, 2.2) of an apparatus (1) by way of first means (12) of a loading station (2) of the at least one production line (2.1, 2.2);
b) moving the at least one trough (12) from the loading station (3) to a filling station (4) of the at least one production line (2.1, 2.2);
c) filling the at least one mold (12) with curd by way of at least one supply line (16.1, 16.2) of the filling station (3);
d) moving the at least one trough (12) from the filling station (3) to a covering station (5) of the at least one production line (2.1, 2.2);
e) placing a cover (19) onto the curd filled into the at least one mold (12) by way of second means (18) of the covering station (5);
f) moving the at least one trough (12) from the filling station (3) to a pressing station (6) of the at least one production line (2.1, 2.2);
g) pressing the cover (19) with a predetermined pressure onto the curd filled into the at least one trough (12) by way of pressure-impingement means (20) of the pressing station (6);
h) moving the at least one trough (12) from the pressing station (6) to a retrieving station (7) of the at least one production line (2.1, 2.2);
i) retrieving the at least one mold (12) from the at least one trough (8) by way of third means (21) of the retrieving station (7);
j) moving the at least one trough (12) back to the loading station (3).

14. The method as claimed in claim 13, **characterized in that** the method is carried out using at least two production lines (2.1, 2.2), wherein a controller controls the movement of the at least one trough (12) of each production line (2.1, 2.2) in such a manner that the sequential movement of the at least one trough (12) of a first production line (12.1) through all stations (3, 4, 5, 6, 7) takes place so as to be offset by at least one position, preferably two positions, in relation to the movement of the at least one trough (12) of a second production line (2.2) which neighbors the first production line (2.1).

## Revendications

1. Dispositif (1) de remplissage de moules (12) avec du caillé de fromage ou un mélange de caillé de fromage et de lactosérum, lequel dispositif comporte au moins une ligne de production (2.1, 2.2) pourvue d'au moins une cuve (8) dans laquelle au moins un moule (12) peut être reçu, la ligne de production (2.1, 2.2) comprenant :
a) un poste de chargement (3), qui comporte des premiers moyens (13) destinés à insérer l'au moins un moule (12) dans au moins une cuve (8) ;
b) un poste de remplissage (4) qui comporte au moins une conduite d'alimentation (16.1, 16.2) avec laquelle du caillé de fromage ou un mélange de caillé de fromage et de lactosérum peut être introduit dans au moins un moule (12) ;
c) un poste de recouvrement (5) qui comporte des deuxièmes moyens (18) destinés à placer un couvercle (19) sur le caillé de fromage introduit dans au moins un moule (12) ou sur le mélange rempli de caillé de fromage et de lactosérum ;
d) un poste de pressage (6) qui comporte des moyens d'application de pression (20) qui permettent de presser le couvercle (19) avec une force prédéterminée sur le caillé de fromage introduit dans l'au moins un moule (12) ou sur le mélange de caillé de fromage et de lactosérum qui a été introduit ;
e) un poste de retrait (7) qui comporte des troisièmes moyens (21) destinés à retirer l'au moins un moule de la cuve (8) ;
**caractérisé en ce que** le dispositif comporte des moyens de déplacement (10, 11.1, 11.2) qui permettent de déplacer l'au moins une cuve (8) séquentiellement entre le poste de chargement (3), le poste de remplissage (4), le poste de recouvrement (5), le poste de pressage (6), le poste de retrait (7) et de la ramener au poste de chargement (3) de l'au moins une ligne de production (2.1, 2.2).

2. Dispositif selon la revendication 1, **caractérisé en ce que** le dispositif comporte au moins deux lignes de production (2.1, 2.2), notamment trois, quatre lignes de production ou plus.

3. Dispositif selon l'une des revendications 1 ou 2, **caractérisé en ce que** l'au moins une cuve (8) est reliée à au moins une conduite (24) qui permet d'introduire un liquide, notamment du lactosérum, dans la cuve (8) ou de le vider de celle-ci.

4. Dispositif selon l'une des revendications 1 à 3, **caractérisé en ce que** le dispositif comporte au moins un dispositif de transport (22) destiné à transporter l'au moins un moule jusqu'au poste de chargement (3) et/ou l'au moins un couvercle (19) jusqu'au poste de recouvrement (5) et de transporter de préférence au moins un moule (12) rempli de caillé de fromage ou du mélange de caillé de fromage et de lactosérum hors du poste de retrait (7).

5. Dispositif selon l'une des revendications 1 à 4, **caractérisé en ce que** le poste de retrait (7) comporte un dispositif de rinçage (30) qui permet de rincer l'au moins une cuve (8) après que l'au moins un moule (12) a été retiré.

6. Dispositif selon l'une des revendications 1 à 5, **caractérisé en ce que** les premiers moyens (13) du poste de chargement (3), les deuxièmes moyens (18) du poste de recouvrement (5) et les troisièmes moyens (21) du poste de retrait (7) sont conçus comme des premier, deuxième ou troisième modules de manipulation qui permettent de déplacer l'au moins un moule (12) ou couvercle (19) linéairement dans au moins deux directions spatiales.

7. Dispositif selon l'une des revendications 1 à 6, **caractérisé en ce que** le poste de remplissage (4) comporte au moins un élément de remplissage (14) déplaçable linéairement au moins dans la direction verticale, l'élément de remplissage (14) comportant un capot (15) qui peut être abaissé sur l'au moins une cuve (8) par déplacement dans la direction verticale, l'au moins une conduite d'alimentation étant disposée à l'intérieur du capot (15).

8. Dispositif selon l'une des revendications 1 à 7, **caractérisé en ce que** le dispositif comporte pour chaque ligne de production (2.1, 2.2) au moins un premier réservoir (31.1, 31.2) destiné au caillé de fromage ou à un mélange de caillé de fromage et de lactosérum et au moins un deuxième réservoir (32.1, 32.2) destiné à un liquide, notamment du lactosérum.

9. Dispositif selon la revendication 2 en combinaison avec l'une des revendications 3 à 8, **caractérisé en ce que** le dispositif comporte une commande qui commande les moyens de déplacement (10, 11.1, 11.2) de chaque ligne de production (2.1, 2.2) de telle manière que l'au moins une cuve (8) d'une ligne de production (2.1) soit décalée d'au moins une position vers au moins une cuve d'une ligne de production adjacente (2.2) séquentiellement entre le poste de chargement (3), le poste de remplissage (4), le poste de recouvrement (5), le poste de pressage (6), le poste de retrait (7) et de la ramener au poste de chargement (3) de l'au moins une ligne de production (2.1, 2.2).

10. Dispositif selon l'une des revendications 1 à 9, **caractérisé en ce que** le poste de chargement (3), le poste de remplissage (4), le poste de recouvrement (5), le poste de pressage (6) et le poste de retrait (7) sont disposés linéairement les uns derrière les autres.

11. Dispositif selon l'une des revendications 1 à 9, **caractérisé en ce que** le poste de chargement (3), le poste de recouvrement (5) et le poste de retrait (7) ou le poste de chargement (3) et le poste de retrait (7) sont rassemblés en un poste multifonctionnel (33).

12. Ensemble comprenant un dispositif selon l'une des revendications 1 à 11 et au moins un moule (12) destiné au remplissage de caillé de fromage ou d'un mélange de caillé de fromage et de lactosérum, **caractérisé en ce que** le moule (12) comporte au moins une paroi périphérique pourvue de perforations qui sont conçues de manière à permettre le passage du liquide, en particulier du lactosérum, à travers la paroi et retenir cependant le caillé de fromage à l'intérieur du moule (12).

13. Procédé de remplissage de moules (12) avec du caillé de fromage, notamment à l'aide d'un dispositif (1) selon l'une des revendications 1 à 11, ledit procédé comprenant les étapes suivantes :
a) insérer au moins un moule (12) dans au moins une cuve (8) d'au moins une ligne de production (2.1, 2.2) d'un dispositif (1) par le biais de premiers moyens (13) d'un poste de chargement (3) de l'au moins une ligne de production (2.1, 2.2) ;
b) déplacer l'au moins une cuve (8) du poste de chargement (3) vers un poste de remplissage (4) de l'au moins une ligne de production (2.1, 2.2) ;
c) remplir l'au moins un moule (12) avec du caillé de fromage par le biais d'au moins une conduite d'alimentation (16.1, 16.2) du poste de remplissage (4) ;
d) déplacer l'au moins une cuve (8) du poste de remplissage (4) vers un poste de recouvrement (5) de l'au moins une ligne de production (2.1, 2.2) ;
e) placer un couvercle (19) sur le caillé de fromage introduit dans au moins un moule (12) au moyen de deuxièmes moyens (18) du poste de recouvrement (5) ;
f) déplacer l'au moins une cuve (8) du poste de remplissage (4) vers un poste de pressage (6) de l'au moins une ligne de production (2.1, 2.2) ;
g) presser le couvercle (19) avec une pression prédéterminée sur le caillé de fromage, qui a été introduit dans au moins une cuve (8), par le biais de moyens d'application de pression (20) du poste de pressage (6) ;
h) déplacer l'au moins une cuve (8) du poste de pressage (6) vers un poste de retrait (7) de l'au moins une ligne de production (2.1, 2.2) ;
i) retirer l'au moins un moule (12) de l'au moins un cuve (8) par le biais de troisièmes moyens (21) du poste de retrait (7) ;
j) déplacer l'au moins une cuve (8) vers le poste de chargement (3).

14. Procédé selon la revendication 13, **caractérisé en ce que** le procédé est réalisé à l'aide d'au moins deux lignes de production (2.1, 2.2), une commande commandant le déplacement d'au moins une cuve (8) de chaque ligne de production (2.1, 2.2) de telle manière que le déplacement séquentiel d'au moins une cuve (8) d'une première ligne de production (2.1) à travers tous les postes (3, 4, 5, 6, 7) soit décalé d'au moins une position, de préférence de deux positions, par rapport au déplacement d'au moins une cuve (8) d'une deuxième ligne de production (2.2) adjacente à la première ligne de production (2.1).
